# FASCICULE DE BREVET EUROPEEN

(11) **EP 1 288 480 B1**
(45) Date de publication et mention de la délivrance du brevet: **15.12.2004**
(21) Numéro de dépôt: 02291940.1
(22) Date de dépôt: 01.08.2002
(51) Int. Cl.: F02K 7/10

(54) **Statoréacteur pour aéronef à vol supersonique et hypersonique.**
Staustrahltriebwerk für Über- und Hyperschallflugzeug
Ramjet for supersonic and hypersonic aircraft

(30) Priorité: 04.09.2001 FR 0111413
(43) Date de publication de la demande: 05.03.2003
(73) Titulaire: MBDA France, 75116 Paris (FR)
(72) Inventeur: Bouchez, Marc, 18000 Bourges (FR); Falempin, Francois, 78730 St Arnoult en Yvelines (FR); Levine, Vadim, Moscou (RU)
(74) Mandataire: Bonnetat, Christian

(56) Documents cités:
- GB-A- 2 222 635
- US-A- 3 456 664
- US-A- 5 727 382

## Description

La présente invention concerne un statoréacteur pour aéronef à vol supersonique et hypersonique, destiné à fonctionner sur une large plage de vitesses, notamment entre Mach 2 et Mach 8.

La conception d'un tel statoréacteur, généralement appelé statoréacteur mixte du fait qu'il possède un domaine de fonctionnement étendu grâce à la succession d'une phase de combustion subsonique et d'une phase de combustion supersonique, soulève de nombreuses difficultés aussi bien en ce qui concerne la définition de la veine aérodynamique que de la réalisation de la structure délimitant cette veine.

Différentes techniques ont été mises en oeuvre pour tenter de surmonter ces difficultés. Parmi ces techniques, l'une des plus intéressantes est celle décrite par le document US-5 727 382.

Ce document décrit un statoréacteur comportant un corps de statoréacteur allongé qui est constitué de quatre parois deux à deux opposées qui délimitent entre elles :
- une entrée pour un flux de comburant,
- une chambre de combustion à géométrie variable, qui est pourvue d'au moins un injecteur de combustible et dans laquelle sont effectués le mélange comburant-combustible et la combustion dudit mélange, et
- une tuyère d'échappement, canalisant les gaz sortant de ladite chambre de combustion,
deux desdites parois opposées étant planes et parallèles entre elles.

Dans ce statoréacteur connu, l'une des deux autres parois opposées est réalisée à l'aide de plaques articulées l'une à la suite de l'autre, afin d'être déformable. Un système d'actionneurs permet d'assurer la mise en place et le maintien de ladite paroi déformable à la géométrie désirée en fonction des conditions de vol. L'avantage d'une telle paroi déformable commandée réside en la capacité d'adapter avec précision l'évolution de la section de la chambre de combustion le long de la longueur de celle-ci à chaque condition de vol et en la possibilité de mettre en place un col de tuyère géométrique adapté à la combustion subsonique. En revanche, la réalisation pratique d'un tel statoréacteur est complexe et coûteuse, notamment à cause des charnières entre plaques mobiles. Par ailleurs, pour pouvoir ménager une chambre de combustion subsonique satisfaisante, ce statoréacteur doit comporter une chambre de combustion supersonique un peu trop longue, qui limite quelque peu les performances dudit statoréacteur à vitesse élevée et complique son refroidissement.

Par ailleurs, le document GB-2 222 635 décrit un statoréacteur pour aéronef à vol supersonique et hypersonique, comportant un corps allongé qui est constitué :
- par deux parois latérales, planes et parallèles entre elles ;
- par une paroi supérieure fixe, solidaire desdites parois latérales et présentant, en profil, la forme générale rigide d'un V ouvert à angle obtus, de sorte que ladite paroi supérieure comporte un flanc avant et un flanc arrière inclinés l'un par rapport à l'autre et reliés par une arête au moins approximativement orthogonale auxdites parois latérales ; et
- par une paroi inférieure montée mobile en bloc entre lesdites parois latérales pour pouvoir coulisser en translation, ladite paroi inférieure présentant également en profil la forme générale rigide d'un V ouvert à angle obtus, mais inversé par rapport à celui de ladite paroi supérieure, ladite paroi inférieure comportant ainsi un flanc avant et un flanc arrière inclinés l'un par rapport à l'autre et reliés par une arête au moins approximativement orthogonale auxdites parois latérales, ledit flanc avant de la paroi inférieure comportant :
   - au moins une première face, de direction générale au moins sensiblement parallèle au flanc arrière de ladite paroi supérieure ; et
   - au moins une seconde face, reliée solidairement à ladite première face le long d'une ligne de liaison au moins approximativement orthogonale auxdites parois latérales, ladite seconde face étant inclinée par rapport à ladite première face de sorte que, en regard de ladite paroi supérieure, l'ensemble de ladite première face et de ladite seconde face est concave ;
lesdites parois dudit corps délimitant entre elles :
- une entrée pour un flux de comburant, ladite entrée de comburant étant formée entre le flanc avant de ladite paroi supérieure et la partie correspondante de la seconde face dudit flanc avant de ladite paroi inférieure ;
- une chambre de combustion, qui est pourvue d'au moins un injecteur de combustible et dans laquelle sont effectués le mélange comburant-combustible et la combustion dudit mélange ; et
- une tuyère d'échappement, canalisant les gaz sortant de ladite chambre de combustion et formée entre ledit flanc arrière de la paroi supérieure et le flanc arrière de la paroi inférieure.

Dans ce dernier document, la paroi inférieure coulissante fait office de diffuseur d'onde de choc.

L'objet de la présente invention est un tel statoréacteur à paroi inférieure coulissante permettant d'obtenir une chambre de combustion optimale, que la combustion soit subsonique ou supersonique.

A cette fin, selon l'invention, le statoréacteur à paroi inférieure coulissante, du type rappelé ci-dessus, est remarquable en ce que :
- ledit injecteur de combustible est disposé au voisinage de l'arête de ladite paroi supérieure ;
- ladite première face du flanc avant de la paroi inférieure est disposée en regard dudit flanc arrière de ladite paroi supérieure ;
- ladite arête de la paroi supérieure se trouve en regard de ladite seconde face de ladite paroi inférieure, tandis que ladite ligne de liaison entre lesdites première et seconde faces se trouve en regard du flanc arrière de la paroi supérieure, de sorte que ladite seconde face est disposée en regard dudit injecteur de combustible avec une partie en regard du flanc arrière de la paroi supérieure et une partie en regard du flanc avant de ladite paroi supérieure ;
- ladite chambre de combustion est formée entre, d'une part, ledit flanc arrière de ladite paroi supérieure et, d'autre part, ladite première face et la partie correspondante de ladite seconde face de ladite paroi inférieure ; et
- le coulissement de la paroi inférieure rapproche dudit injecteur de combustible ladite ligne de liaison entre lesdites première et seconde faces pour modifier progressivement les géométries de ladite entrée de comburant et de ladite chambre de combustion, lesdites géométries passant progressivement d'un premier état pour lequel, pour un nombre de Mach compris entre 1,5 et 3, ladite entrée de comburant ne contracte que faiblement ledit flux de comburant et ladite chambre de combustion est longue et divergente, à un second état pour lequel, pour un nombre de Mach compris entre 8 et 12, ladite entrée de comburant contracte fortement ledit flux de comburant et ladite chambre de combustion est plus courte et présente une section constante.

Ainsi, grâce à la présente invention, par la simple mise en oeuvre de la translation --linéaire ou curviligne-- d'une des parois du statoréacteur, on obtient la variation progressive de la section de la chambre de combustion et des géométries de l'entrée de comburant et de la tuyère, ce qui permet d'adapter le statoréacteur aux conditions de vol de l'aéronef, afin d'obtenir la performance maximale de celui-ci en ce qui concerne soit la poussée, soit l'impulsion spécifique. Pour ce faire, les deux parois du statoréacteur, autres que les deux qui sont planes et parallèles entre elles, sont profilées de telle sorte que ladite translation conduise à imposer des lois de section très différentes : une entrée de comburant (air) à faible taux de contraction associée à une chambre de combustion longue et divergente équipée d'un col géométrique de tuyère pour les faibles nombres de Mach et une entrée d'air à fort taux de contraction associée à une chambre de combustion plus courte à section constante pour les nombres de Mach élevés.

La mise en oeuvre de la présente invention permet donc de supprimer la paroi à géométrie variable du statoréacteur du document US-5 727 382, avec ses inconvénients que sont les charnières d'articulation des plaques, la pluralité d'actionneurs de ces plaques, etc ... Au contraire, dans le statoréacteur de l'invention, un seul actionneur est nécessaire pour effectuer ladite translation. De plus, il est possible d'accepter une étanchéité imparfaite de ladite paroi mobile en translation avec lesdites parois planes et parallèles.

De préférence, ladite seconde paroi mobile est plus courte que ladite première paroi supérieure.

Par ailleurs, afin de former, avec ladite seconde face, un col d'entrée marqué (section minimale) pour le flux de comburant, l'arête de ladite première paroi présente la forme d'un pan coupé.

Les figures du dessin annexé feront bien comprendre comment l'invention peut être réalisée. Sur ces figures, des références identiques désignent des éléments semblables.

La figure 1 montre, en vue en perspective schématique avec arrachement partiel, un exemple de réalisation du statoréacteur conforme à la présente invention.

La figure 2 est une vue en coupe transversale schématique suivant la ligne II-II de la figure 1.

La figure 3 est une vue latérale schématique partielle suivant la ligne III-III de la figure 2.

La figure 4 est un diagramme illustrant, en vue longitudinale schématique, les éléments principaux du statoréacteur conforme à la présente invention.

La figure 5 et la figure 6 illustrent, respectivement, les positions relatives des éléments principaux dudit statoréacteur, du côté avant et du côté arrière de celui-ci, pour un fonctionnement à Mach 3.

La figure 7 et la figure 8 correspondent respectivement aux figures 5 et 6, pour un fonctionnement du statoréacteur à Mach 6.

La figure 9 et la figure 10 correspondent respectivement aux figures 5 et 6, pour un fonctionnement du statoréacteur à Mach 8.

La figure 11 est un diagramme indiquant un exemple de trajectoire altimétrique en fonction du Mach de vol, pour le statoréacteur conforme à la présente invention.

La figure 12 est un diagramme indiquant l'impulsion spécifique en fonction du Mach de vol, pour ledit statoréacteur.

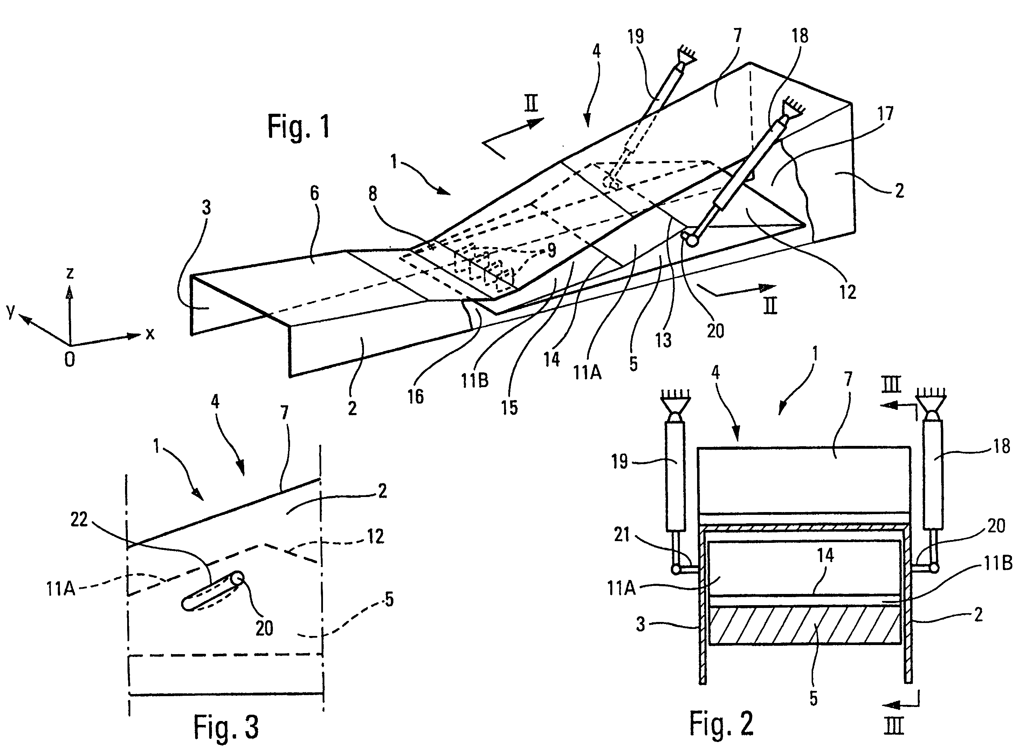

Le statoréacteur pour aéronef selon l'invention illustré par les figures 1 à 4 comporte un corps de statoréacteur allongé 1 constitué de quatre parois 2 à 5, deux à deux opposées. Les deux parois latérales opposées 2 et 3 sont planes et parallèles entre elles.

La paroi supérieure 4 est solidaire des deux parois latérales 2 et 3 et elle présente une forme générale, fixe, à profil en V ouvert à angle obtus. Elle comporte un flanc avant 6 et un flanc arrière 7, inclinés l'un par rapport à l'autre et reliés par une arête en pan coupé 8. Comme cela est illustré par les figures, les flancs avant 6 et arrière 7 peuvent chacun, en pratique, comporter des facettes légèrement inclinées les unes par rapport aux autres.

Des injecteurs de combustible 9 sont disposés au voisinage de l'arête 8.

La paroi inférieure 5, dont la longueur ℓ est inférieure à la longueur L de la paroi supérieure 4, présente également une forme générale, fixe, à profil en V ouvert à angle obtus. Elle est inversée par rapport à la paroi supérieure 4. Elle comporte un flanc avant 11 et un flanc arrière 12, inclinés l'un par rapport à l'autre et reliés par une arête 13.

Le flanc avant 11 de la paroi inférieure 5 comporte une première face 11 A, dont la direction générale est au moins sensiblement parallèle au flanc arrière 7 de la paroi supérieure 4 et qui est disposée en regard de ce dernier flanc 7. Le flanc 11 comporte, de plus, une seconde face 11B reliée solidairement à ladite première face 11A le long d'une ligne de liaison 14, orthogonale aux parois latérales 2 et 3. La seconde face 11B est inclinée par rapport à la première face 11 A pour former une concavité en regard de la paroi supérieure 4.

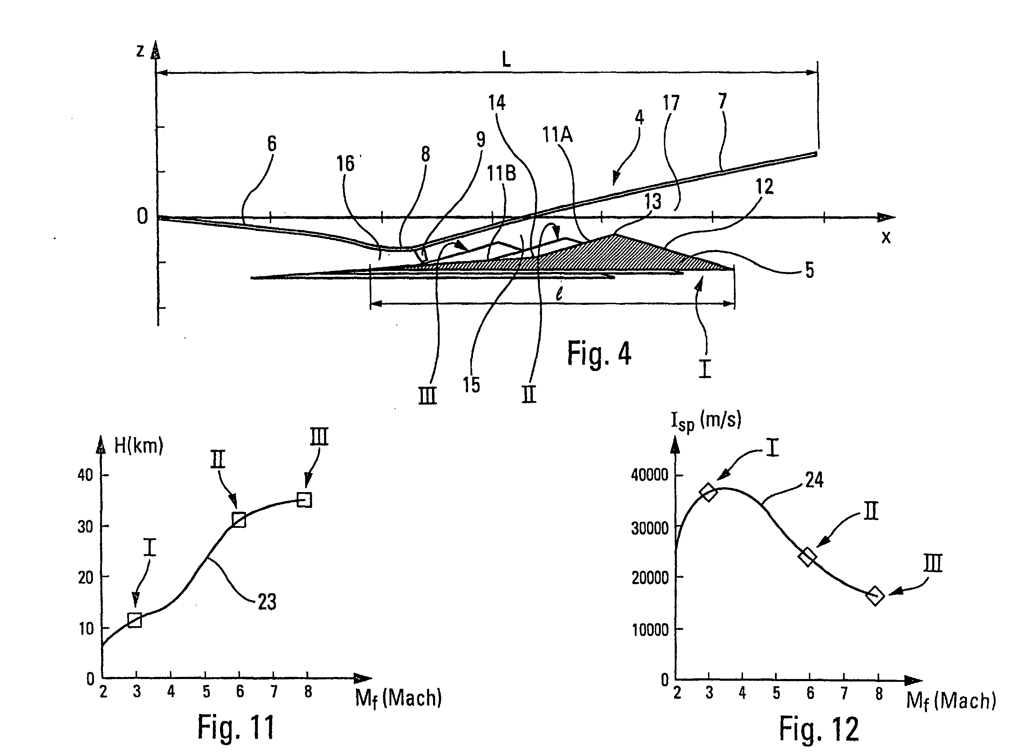

Comme on peut le voir clairement sur la figure 4 (dessinée dans un repère d'axes rectangulaires ox, oy et oz défini sur la figure 1 et dans lequel les axes ox et oz sont respectivement parallèles à la longueur et à la hauteur dudit statoréacteur) :
- l'arête 8 de la paroi supérieure 4 est disposée en regard de la seconde face 11 B de la paroi inférieure 5 ;
- la ligne de liaison 14 et l'arête 13 de la paroi inférieure 5 sont disposées en regard du flanc arrière 7 de la paroi supérieure 4 ;
- la première face 11A de la paroi inférieure 5 se trouve totalement en regard du flanc arrière 7 de la paroi supérieure 4 ; et
- la seconde face 11B de la paroi inférieure 5 se trouve en regard des injecteurs 9, la partie avant de ladite seconde face 11 B étant en regard du flanc avant 6 de la paroi supérieure 4, alors que la paroi arrière de cette face B se trouve en regard du flanc arrière 7 de la paroi supérieure 4.

Ainsi, dans le statoréacteur des figures 1 à 4 :
- la chambre de combustion 15 est formée entre, d'une part, le flanc arrière 7 de la paroi supérieure 4 et, d'autre part, la première face 11 A et la partie de la seconde face 11B de la paroi inférieure 5, en regard dudit flanc arrière 7 ;
- l'entrée 16 de comburant (air) est formée entre le flanc avant 6 de la paroi supérieure 4 et la partie de la seconde face 11 B de la paroi inférieure 5, en regard dudit flanc avant 6 ; et
- la tuyère d'échappement 17 est formée entre le flanc arrière 7 de la paroi supérieure 4 et le flanc arrière 12 de la paroi inférieure 5.

Par ailleurs, la paroi inférieure 5 du statoréacteur 2 est montée mobile, dans son intégralité, entre lesdites parois latérales 2 et 3 pour pouvoir coulisser longitudinalement en translation.

Sur la figure 1, qui n'est qu'une illustration schématique :
- on a représenté les moyens de coulissement et de guidage sous la forme de vérins externes 18, 19 et d'axes 20, 21 coulissant dans des rampes 22, découpées dans les parois latérales 2 et 3. Ainsi, les vérins 18, 19 peuvent pousser les axes 20, 21 qui coulissent, guidés par les rampes 22, pour déplacer la paroi inférieure 5, par rapport à la paroi supérieure 4 et aux parois latérales 2 et 3. Bien entendu, de tels moyens de coulissement et de guidage ne sont que schématiques et ils pourraient, avantageusement, être replacés par des moyens moteurs logés au moins en partie à l'intérieur de ladite paroi inférieure 5 ;
- la rampe 22 représentée en trait plein sur la figure 3 est rectiligne, mais elle pourrait bien entendu être curviligne, comme cela est illustré en pointillés ; et
- on n'a pas représenté les joints entre la paroi inférieure 5 et les parois latérales 2 et 3, ni le système d'étanchéité au niveau de la rampe 22.

Quel que soit le mode de réalisation pratique desdits moyens de coulissement et de guidage, on conçoit aisément qu'ils permettent de déplacer ladite paroi inférieure 5 pour rapprocher progressivement en translation la ligne de liaison 14 des injecteurs 9, afin de modifier progressivement les géométries de l'entrée de comburant 16 et de la chambre de combustion 15.

Sur la figure 4, on a esquissé trois positions successives de la paroi inférieure 5 par rapport aux autres parois 2, 3 et 4, ces positions successives étant respectivement désignées par les références I, II et III et correspondant par exemple respectivement à des valeurs de Mach de vol Mf différentes.

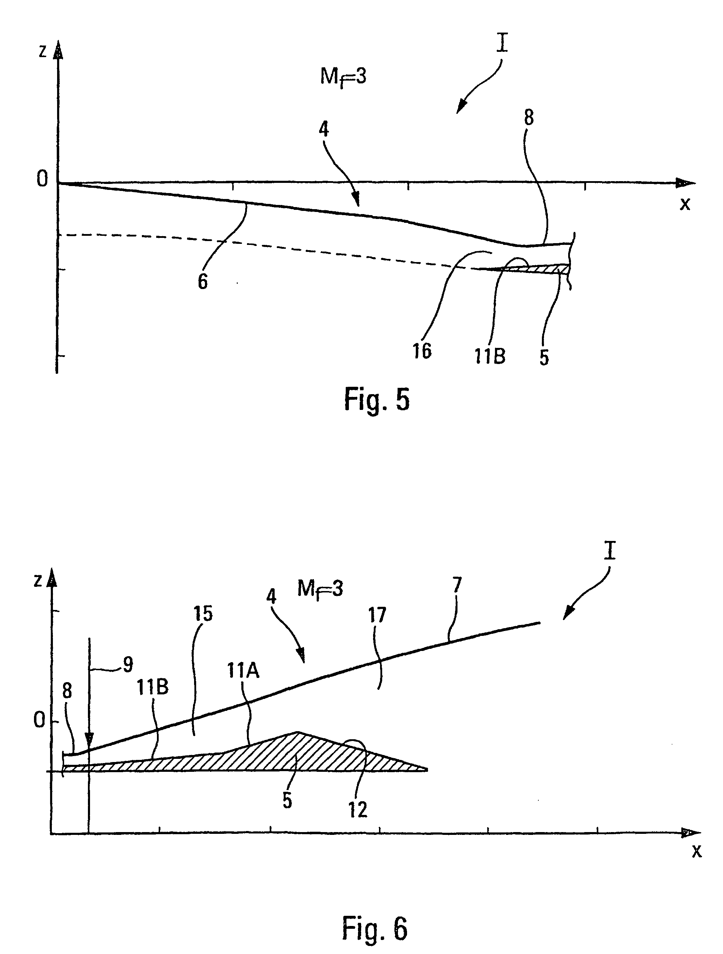

Dans la position I, illustrée plus en détail sur les figures 5 et 6 (la figure 5 étant à une échelle double de la figure 6) et correspondant à un Mach de vol Mf relativement faible égal à 3, on peut voir (figure 5) que l'entrée de comburant 16 est relativement peu convergente et n'impose au flux de comburant qu'un taux de contraction faible, alors que (figure 6) la chambre de combustion 15 est alors longue et divergente.

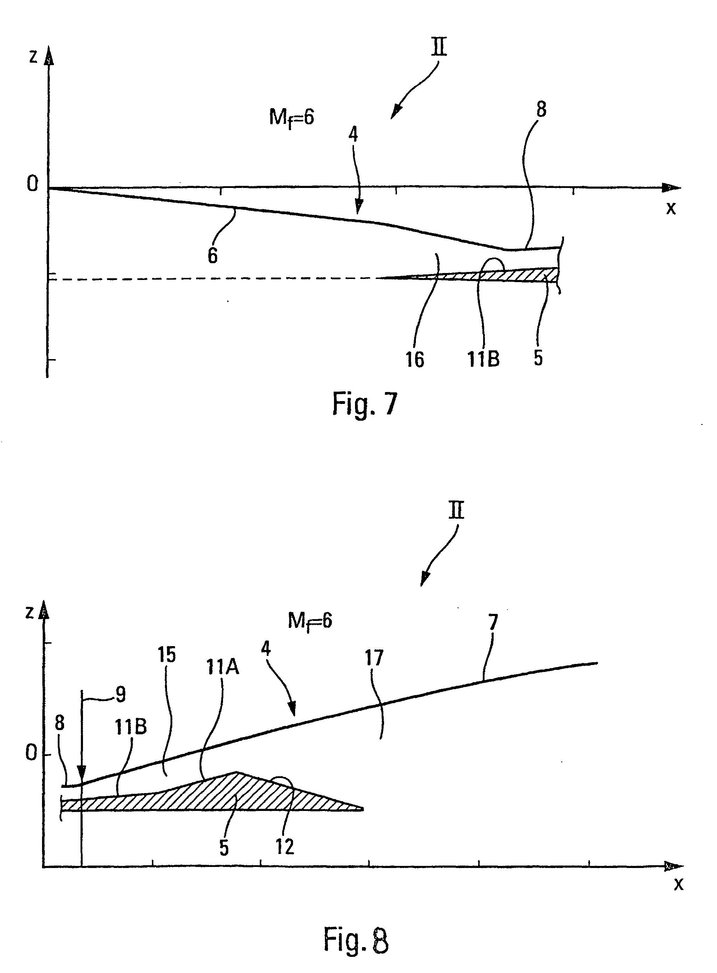

Dans la position II (voir les figures 7 et 8, avec la figure 7 à une échelle double de la figure 8), qui correspond à un Mach de vol Mf intermédiaire de 6, on peut voir que, par rapport à la position I, l'entrée de comburant 16 est plus convergente et contracte plus fortement le flux de comburant (figure 7), alors que la chambre de combustion 15 est moins longue et moins divergente.

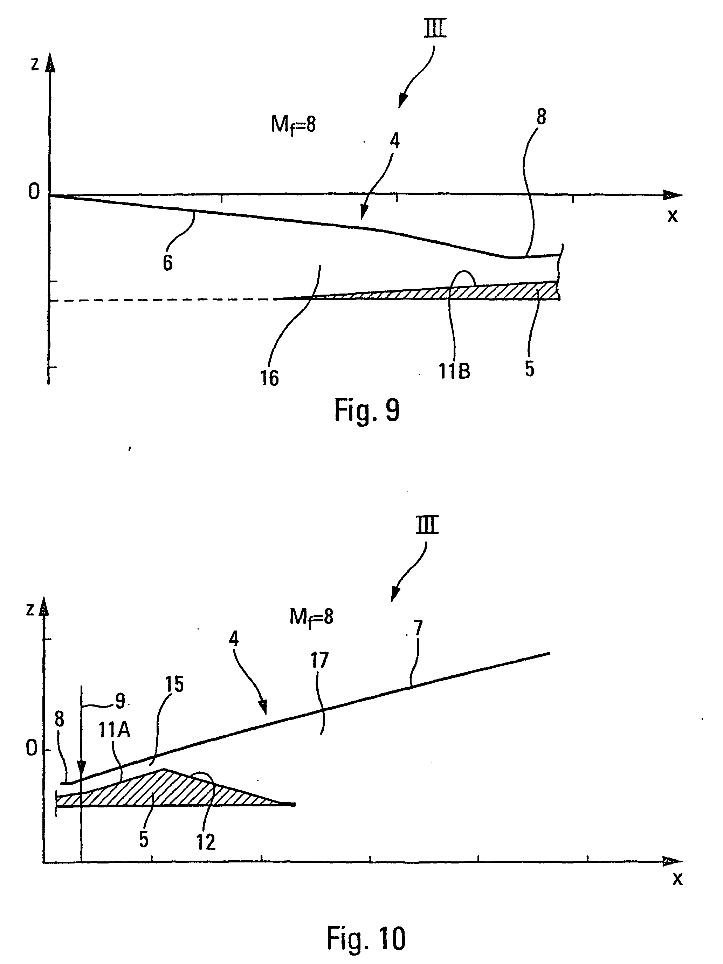

Enfin, dans la position III (voir les figures 9 et 10, avec la figure 9 à une échelle double de la figure 10) correspondant à un Mach de vol Mf de valeur élevée égale à 8, l'entrée de comburant est fortement convergente et impose un taux de contraction élevée au flux de comburant et, simultanément, la chambre de combustion est courte et présente une section constante sur toute sa longueur.

On voit ainsi que, grâce à la présente invention, on peut modifier progressivement les géométries de l'entrée de comburant 16 et de la chambre de combustion 15 au fur et à mesure de l'augmentation de la valeur du Mach de vol Mf pour faire passer progressivement les géométries d'un premier état, qui est approprié à un Mach de vol supersonique faible (Mach 1,5 à 3) et pour lequel l'entrée de comburant ne contracte que faiblement le flux de comburant et la chambre de combustion est longue et divergente, à un second état, qui est approprié à un Mach de vol supersonique élevé (Mach 8 à 12) et pour lequel ladite entrée de comburant contracte fortement le flux de comburant et ladite chambre de combustion est courte avec une section constante.

La courbe 23 de la figure 11 illustre un exemple de variation de l'altitude H (en km) du statoréacteur en fonction du nombre de Mach de vol Mf. Sur cette courbe 23, on a indiqué les points de fonctionnement correspondant aux états I, II et III détaillés ci-dessus.

De même, sur la courbe 24 de la figure 12, illustrant la variation de l'impulsion spécifique lsp (en m/s) en fonction du nombre de Mach de vol Mf, on a placé les points correspondant auxdits états I, II et III.

## Revendications

1. Statoréacteur pour aéronef à vol supersonique et hypersonique, comportant un corps allongé (1) qui est constitué :
- par deux parois latérales (2 et 3), planes et parallèles entre elles ;
- par une paroi supérieure fixe (4), solidaire desdites parois latérales (2 et 3) et présentant, en profil, la forme générale rigide d'un V ouvert à angle obtus, de sorte que ladite paroi supérieure (4) comporte un flanc avant (6) et un flanc arrière (7) inclinés l'un par rapport à l'autre et reliés par une arête (8) au moins approximativement orthogonale auxdites parois latérales (2 et 3) ; et
- par une paroi inférieure (5) montée mobile en bloc entre lesdites parois latérales (2 et 3) pour pouvoir coulisser en translation, ladite paroi inférieure (5) présentant également en profil la forme générale rigide d'un V ouvert à angle obtus, mais inversé par rapport à celui de ladite paroi supérieure (4), ladite paroi inférieure (5) comportant ainsi un flanc avant (11A, 11B) et un flanc arrière (12) inclinés l'un par rapport à l'autre et reliés par une arête (13) au moins approximativement orthogonale auxdites parois latérales (2, 3), ledit flanc avant (11A, 11B) de la paroi inférieure (5) comportant :
. au moins une première face (11A), de direction générale au moins sensiblement parallèle au flanc arrière (7) de ladite paroi supérieure (4) ; et
. au moins une seconde face (11B), reliée solidairement à ladite première face (11A) le long d'une ligne de liaison (14) au moins approximativement orthogonale auxdites parois latérales (2 et 3), ladite seconde face (11B) étant inclinée par rapport à ladite première face (11A) de sorte que, en regard de ladite paroi supérieure, l'ensemble de ladite première face (11 A) et de ladite seconde face (11B) est concave ;
lesdites parois (2 à 5) dudit corps (1) délimitant entre elles :
- une entrée (16) pour un flux de comburant, ladite entrée de comburant (16) étant formée entre le flanc avant (6) de ladite paroi supérieure (4) et la partie correspondante de la seconde face (11B) dudit flanc avant (11A, 11B) de ladite paroi inférieure (5) ;
- une chambre de combustion (15), qui est pourvue d'au moins un injecteur de combustible (9) et dans laquelle sont effectués le mélange comburant-combustible et la combustion dudit mélange ; et
- une tuyère d'échappement (17), canalisant les gaz sortant de ladite chambre de combustion et formée entre ledit flanc arrière (7) de la paroi supérieure (4) et le flanc arrière (12) de la paroi inférieure (5),
**caractérisé en ce que** :
- ledit injecteur de combustible (9) est disposé au voisinage de l'arête (8) de ladite paroi supérieure (4) ;
- ladite première face (11A) du flanc avant (11A, 11 B) de la paroi inférieure (5) est disposée en regard dudit flanc arrière (7) de ladite paroi supérieure (4) ;
- ladite arête (8) de la paroi supérieure (4) se trouve en regard de ladite seconde face (11B) de ladite paroi inférieure (5), tandis que ladite ligne de liaison (14) entre lesdites première et seconde faces (11A, 11B) se trouve en regard du flanc arrière (7) de la paroi supérieure (4), de sorte que ladite seconde face (11B) est disposée en regard dudit injecteur de combustible (9) avec une partie en regard du flanc arrière (7) de la paroi supérieure (4) et une partie en regard du flanc avant (6) de ladite paroi supérieure (4) ;
- ladite chambre de combustion (15) est formée entre, d'une part, ledit flanc arrière (7) de ladite paroi supérieure (4) et, d'autre part, ladite première face (11A) et la partie correspondante de ladite seconde face (11B) de ladite paroi inférieure (5) ; et
- le coulissement de la paroi inférieure (5) rapproche dudit injecteur de combustible (9) ladite ligne de liaison (14) entre lesdites première et seconde faces (11A, 11B) pour modifier progressivement les géométries de ladite entrée de comburant (16) et de ladite chambre de combustion (15), lesdites géométries passant progressivement d'un premier état pour lequel, pour un nombre de Mach compris entre 1,5 et 3, ladite entrée de comburant (16) ne contracte que faiblement ledit flux de comburant et ladite chambre de combustion (15) est longue et divergente, à un second état pour lequel, pour un nombre de Mach compris entre 8 et 12, ladite entrée de comburant (16) contracte fortement ledit flux de comburant et ladite chambre de combustion (15) est plus courte et présente une section constante.

2. Statoréacteur selon la revendication 1,
**caractérisé en ce que** la translation de ladite paroi inférieure (5) est rectiligne.

3. Statoréacteur selon la revendication 1,
**caractérisé en ce que** la translation de ladite paroi inférieure (5) est curviligne.

4. Statoréacteur selon l'une des revendications 1 à 3,
**caractérisé en ce que** ladite paroi inférieure (5) est plus courte que ladite paroi supérieure (4).

5. Statoréacteur selon l'une des revendications 1 à 4,
**caractérisé en ce que** l'arête (8) de ladite paroi supérieure (4) présente la forme d'un pan coupé pour définir, avec ladite seconde face (11B), une section minimale d'entrée pour le flux de comburant.

## Patentansprüche

1. Staustrahltriebwerk für Über- und Hyperschallflugzeuge mit einem langgestreckten Körper (1) bestehend aus:
- zwei ebenen und zueinander parallelen Seitenwänden (2 und 3);
- einer unbeweglichen oberen Wand (4), die einstückig mit den Seitenwänden (2 und 3) ausgebildet ist und im Profil die allgemeine starre Form eines zu einem stumpfen Winkel geöffneten V aufweist, so dass die obere Wand (4) eine vordere Flanke (6) und eine hintere Flanke (7) aufweist, die schräg zueinander stehen und durch eine Kante (8) miteinander verbunden sind, die zumindest annähernd orthogonal zu den Seitenwänden (2 und 3) ist; und
- einer unteren Wand (5), die als Ganzes beweglich zwischen den Seitenwänden (2 und 3) angebracht ist, um sich durch Verschiebung verstellen zu lassen, wobei die untere Wand (5) ebenfalls im Profil die allgemeine starre Form eines V aufweist, das jedoch in entgegengesetzter Richtung zu einem stumpfen Winkel geöffnet ist wie die obere Wand (4), und wobei die untere Wand (5) somit eine vordere Flanke (11A, 11B) und eine hintere Flanke (12) aufweist, die schräg zueinander stehen und durch eine Kante (13) miteinander verbunden sind, die zumindest annähernd orthogonal zu den Seitenwänden (2, 3) ist, wobei die vordere Flanke (11A, 11B) der unteren Wand (5) Folgendes aufweist:
. mindestens eine erste Fläche (11A), deren allgemeine Richtung zumindest im Wesentlichen parallel zur hinteren Flanke (7) der oberen Wand (4) ist; und
. mindestens eine zweite Fläche (11B), die längs einer Verbindungslinie (14), die zumindest annähernd orthogonal zu den Seitenwänden (2 und 3) ist, einstückig mit der ersten Fläche (11A) verbunden ist, wobei die zweite Fläche (11B) schräg zur ersten Fläche (11A) steht, so dass die Einheit aus der ersten Fläche (11A) und der zweiten Fläche (11B) in Bezug zur oberen Wand konkav ist;
wobei die Wände (2 bis 5) des Körpers (1) zwischen sich Folgendes einschließen:
- einen Einlauf (16) für eine Sauerstoffträger-Strömung, wobei der Einlauf für den Sauerstoffträger (16) zwischen der vorderen Flanke (6) der oberen Wand (4) und dem entsprechenden Teil der zweiten Fläche (11B) der vorderen Flanke (11A, 11B) der unteren Wand (5) ausgebildet ist;
- eine Brennkammer (15), die mit mindestens einem Treibstoff-Injektor (9) versehen ist und in der die Vermischung von Sauerstoffträger und Treibstoff sowie die Verbrennung dieses Gemisches stattfinden, und
- eine Schubdüse (17), die die aus der Brennkammer austretenden Gase kanalisiert und zwischen der hinteren Flanke (7) der oberen Wand (4) und der hinteren Flanke (12) der unteren Wand (5) ausgebildet ist,
**dadurch gekennzeichnet, dass**:
- der Treibstoff-Injektor (9) in der Nähe der Kante (8) der oberen Wand (4) angeordnet ist;
- die erste Fläche (11A) der vorderen Flanke (11A, 11B) der unteren Wand (5) gegenüber der hinteren Flanke (7) der oberen Wand (4) angeordnet ist;
- sich die Kante (8) der oberen Wand (4) gegenüber der zweiten Fläche (11 B) der unteren Wand (5) befindet, während sich die Verbindungslinie (14) zwischen der ersten und der zweiten Fläche (11A, 11B) gegenüber der hinteren Flanke (7) der oberen Wand (4) befindet, so dass die zweite Fläche (11B) gegenüber dem Treibstoff-Injektor (9) angeordnet ist, wobei sich ein Teil gegenüber der hinteren Flanke (7) der oberen Wand (4) und ein Teil gegenüber der vorderen Flanke (6) der oberen Wand (4) befindet;
- die Brennkammer (15) zwischen der hinteren Flanke (7) der oberen Wand (4) einerseits und der ersten Fläche (11A) und dem entsprechenden Teil der zweiten Fläche (11 B) der unteren Wand (5) andererseits ausgebildet ist; und
- sich durch das Verschieben der unteren Wand (5) die Verbindungslinie (14) zwischen der ersten und der zweiten Fläche (11A, 11B) dem Treibstoff-Injektor (9) nähert, so dass sich die Geometrie des Einlaufs (16) für den Sauerstoffträger und der Brennkammer (15) progressiv ändert, wobei die Geometrie progressiv von einem ersten Zustand, in dem bei einer Mach-Zahl zwischen 1,5 und 3 der Einlauf (16) für den Sauerstoffträger die Sauerstoffträger-Strömung nur geringfügig verengt und die Brennkammer (15) lang und divergent ist, in einen zweiten Zustand übergeht, in dem der Einlauf (16) für den Sauerstoffträger bei einer Mach-Zahl zwischen 8 und 12 die Sauerstoffträger-Strömung stark verengt und die Brennkammer (15) kurz ist und einen gleichbleibenden Querschnitt aufweist.

2. Staustrahltriebwerk nach Anspruch 1,
**dadurch gekennzeichnet, dass** die Verschiebung der unteren Wand (5) geradlinig ist.

3. Staustrahltriebwerk nach Anspruch 1,
**dadurch gekennzeichnet, dass** die Verschiebung der unteren Wand (5) bogenförmig ist.

4. Staustrahltriebwerk nach einem der Ansprüche 1 bis 3,
**dadurch gekennzeichnet, dass** die untere Wand (5) kürzer ist als die obere Wand (4).

5. Staustrahltriebwerk nach einem der Ansprüche 1 bis 4,
**dadurch gekennzeichnet, dass** die Kante (8) der oberen Wand (4) die Form einer gebrochenen Kante aufweist, um zusammen mit der zweiten Fläche (11B) einen minimalen Querschnitt des Einlaufs für die Sauerstoffträger-Strömung zu definieren.

## Claims

1. Ramjet for a supersonic and hypersonic aircraft, including an elongate body (1) which consists of:
- two sidewalls (2 and 3), flat and parallel to each other;
- a fixed upper wall (4), integral with said sidewalls (2 and 3) and exhibiting, in profile, the rigid general shape of a V open at an obtuse angle, in such a way that said upper wall (4) includes a front flank (6) and a rear flank (7) which are inclined with respect to one another and linked by a ridge (8) which is at least approximately orthogonal to said sidewalls (2 and 3); and
- a lower wall (5) mounted movably as one between said sidewalls (2 and 3) so as to be able to slide in translation, said lower wall (5) also featuring, in profile, the rigid general shape of a V open at an obtuse angle, but reversed with respect to that of said upper wall (4), said lower wall (5) thus including a front flank (11A, 11B) and a rear flank (12) which are inclined with respect to one another and linked by a ridge (13) at least approximately orthogonal to said sidewalls (2 and 3), said front flank (11A, 11B) of the lower wall (5) including:
. at least one first face (11A), in a general direction at least substantially parallel to the rear flank (7) of said upper wall (4); and
. at least one second face (11B), linked securely to said first face (11A) along a joint line (14) and at least approximately orthogonal to said sidewalls (2 and 3), said second face (11B) being inclined with respect to said first face (11A) in such a way that, facing said upper wall, the assembly of said first face (11A) and of said second face (11B) is concave;
said walls (2 to 5) of said body (1) delimiting between them:
- an inlet (16) for a flow of oxidant, said oxidant inlet (16) being formed between the front flank (6) of said upper wall (4) and the corresponding part of the second face (11B) of said front flank (11A, 11B) of said lower wall (5);
- a combustion chamber (15), which is provided with at least one fuel injector (9) and in which the oxidant/fuel mixing and the combustion of said mixture are carried out; and
- an exhaust nozzle (17), channeling the gases leaving said combustion chamber and formed between said rear flank (7) of the upper wall (4) and the rear flank (12) of the lower wall (5),
**characterized in that**:
- said fuel injector (9) is arranged in the vicinity of the ridge (8) of said upper wall (4);
- said first face (11A) of the front flank (11A, 11B) of the lower wall (5) is arranged facing said rear flank (7) of said upper wall (4);
- said ridge (8) of the upper wall (4) faces said second face (11B) of said lower wall (5), while said joint line (14) between said first and second faces (11A, 11B) lies opposite the rear flank (7) of the upper wall (4), such that said second face (11B) is arranged with regard to said fuel injector (9) with a part facing the rear flank (7) of the upper wall (4) and a part facing the front flank (6) of said upper wall (4);
- said combustion chamber (15) is formed between, on the one hand, said rear flank (7) of said upper wall (4) and, on the other hand, said first face (11A) and the corresponding part of said second face (11B) of said lower wall (5); and
- the sliding of the lower wall (5) brings said joint line (14) between said first and second faces (11A, 11B) closer to said fuel injector (9) so as progressively to modify the geometries of said oxidant inlet (16) and of said combustion chamber (15), said geometries passing progressively from a first state in which, for a Mach number lying between 1.5 and 3, said oxidant inlet (16) constricts said oxidant flow only slightly and said combustion chamber (15) is long and divergent, to a second state in which, for a Mach number lying between 8 and 12, said oxidant inlet (16) strongly constricts said oxidant flow and said combustion chamber (15) is shorter and exhibits a constant cross section.

2. Ramjet according to Claim 1, **characterized in that** the translation of said lower wall (5) is rectilinear.

3. Ramjet according to Claim 1, **characterized in that** the translation of said lower wall (5) is curvilinear.

4. Ramjet according to one of Claims 1 to 3, **characterized in that** said lower wall (5) is shorter than said upper wall (4).

5. Ramjet according to one of Claims 1 to 4, **characterized in that** the ridge (8) of said upper wall (4) exhibits the shape of a bevel so as, with said second face (11B), to define a minimum inlet cross section for the flow of oxidant.
